# EUROPEAN PATENT SPECIFICATION

(11) **EP 2 995 594 B1**
(45) Date of publication and mention of the grant of the patent: **14.03.2018**
(21) Application number: 15184947.8
(22) Date of filing: 11.09.2015
(51) Int. Cl.: C03B 33/03, B65G 49/06

(54) **METHOD AND MACHINE FOR CUTTING A GLASS SHEET**
VERFAHREN UND MASCHINE ZUM SCHNEIDEN VON GLASPLATTEN
PROCEDE ET MACHINE PERMETTANT DE COUPER DES FEUILLES DE VERRE

(30) Priority: 11.09.2014 IT TO20140715
(43) Date of publication of application: 16.03.2016
(73) Proprietor: Bottero S.p.A., 12100 Cuneo (IT)
(72) Inventor: MARGARIA, Bruno, 12020 VILLAR SAN COSTANZO (IT)
(74) Representative: Boggio, Luigi

(56) References cited:
- EP-A1- 1 591 427
- EP-A1- 2 275 388
- EP-A1- 2 570 371
- EP-A2- 1 284 229

## Description

The present invention concerns a method for cutting a glass sheet.

In particular, the present invention concerns a method for cutting flat or rough glass sheets according to a predefined sheet cutting program.

It is known that for cutting a glass sheet, a cutting table is used having a support surface, a cutting bridge with single cutting head for cutting monolithic glass sheets or dual cutting head for cutting laminated glass sheets; the glass sheet to be cut is fed below the cutting bridge and, after bringing it into abutment against a reference device, it is cut, producing a first crosspiece. The crosspiece, if already finished, i.e. if it does not require further cutting, is moved away from the support surface. If, on the other hand, it has to be further cut, the remaining part of the sheet from which the crosspiece has been separated is retracted on an additional support surface arranged upstream of the cutting table in order not to obstruct the rotation and translation of the crosspiece on the support surface.

In the Italian patent application no. T02008A000919 the remaining part of the sheet is retracted and raised or inclined to allow the insertion of at least part of the crosspiece below the remaining part of the sheet during the rotation and cutting of the crosspiece. This embodiment allows the use of a support table which, in some solutions, is the support table of an operating machine which precedes the cutting table. In this way, the support surface delimits a storage space and the same support surface remains occupied until the end of cutting of the sheet; in the meantime, therefore, the operating machine cannot be used since, as said, its support surface is used as a storage magazine.

In both cases, once cutting of the first crosspiece has been completed, the remaining part of the sheet is brought back onto the support surface of the table, fed forward again until it abuts against the reference device, after which a second crosspiece is cut, with the remaining part of the sheet being retracted or lifted, as for the first crosspiece. The same operations are repeated for all the crosspieces scheduled by the sheet cutting program.

The known machines of the type described above are unsatisfactory above all due to the fact that following the cutting of a crosspiece, the respective remaining sheet portion has to be brought back onto the support surface and fed forward until it abuts against the positioning device. Each remaining sheet portion therefore has to be repositioned after the cutting of a crosspiece.

In addition to this, after the cutting of a crosspiece, the respective remaining sheet portion has to be retracted and/or lifted to avoid collisions during cutting of the cut crosspiece. It is therefore evident that if the retraction involves the operating machine, the latter has to be kept in stand-by, thus resulting in under-use of the machine.

The continuous forward and back movements of the remaining sheet portions and the indispensable repositioning of the remaining sheet portions before the cutting of each crosspiece generate inevitable and progressive positioning errors which have a cumulative effect, hence geometric and/or dimensional errors increase as the number of crosspieces cut increases and they reach their maximum extent with cutting of the last crosspiece.

In addition to this, the additional surface or part of the cutting surface are occupied by the remaining sheet portions until the last crosspiece has been cut. Consequently, until the last crosspiece has been cut, the additional surface cannot be used for other operations.

This entails problems with the cutting of large crosspieces.

In this case, in fact, the remaining sheet portion, even if partially lifted, has to be taken to a considerable distance from the cutting area.

Lastly, the same problems of positioning and collision described for the remaining sheet portions occur during cutting of the crosspieces if further crosspieces are formed which, in turn, have to be cut again. In fact, following the cut, the remaining part of the crosspiece is left on the support surface, creating problems analogous to those created by the remaining sheet portion.

EP2275388A1 discloses a method for handling and cutting a plurality of plate pieces. Such method comprises the steps of cutting a first plate piece from a glass sheet, rotating the first plate piece substantially by 90° and placing the first plate piece in a parking region outside a handling region. A second plate piece is cut and rotated substantially by 90°. The first plate piece is arranged side by side with respect to the second plate piece, in locations independent form each other. Finally, by means of a single pass of the cutting head, the first and second plate pieces are cut.

The object of the present invention is to provide a cutting method which solves the above problems in a simple inexpensive manner, in particular, which allows accurate cuts to be made in limited spaces for the various cutting programs.

A further object of the present invention is to provide a method that can be implemented in compact inexpensive machines and which allows increased use and exploitation of the operating machines already present in the vicinity, in particular upstream of the cutting table.

According to the present invention, a method is provided for cutting a glass sheet, as defined in claim 1.

The present invention also concerns a machine for cutting a glass sheet.

According to the present invention, a machine is provided for cutting a glass sheet, as claimed in claim 8.

The invention will now be described with reference to the accompanying drawings, which illustrate some non-limiting embodiment examples, in which:
figure 1 is a perspective view of a first preferred embodiment of a machine for cutting glass sheets produced according to the precepts of the present invention;
figure 2 illustrates, in lateral elevation, a portion of the machine of figure 1;
figure 3 is a lateral view, on a reduced scale and with parts removed for clarity, according to the arrow III-III of figure 2;
figures 4 and 5 illustrate, in a lateral elevation and perspective view respectively, a detail of figure 2;
figure 6 is a figure analogous to figure 1 and illustrates a second preferred embodiment of the cutting machine according to the present invention; and
figure 7 illustrates a sheet cutting program implemented with the machines of figures 1 or 6.

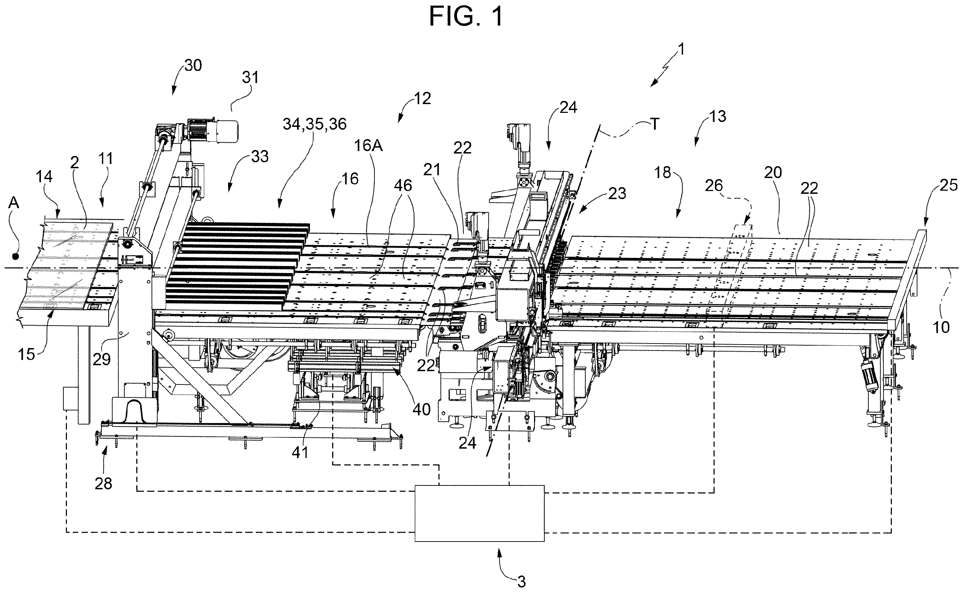

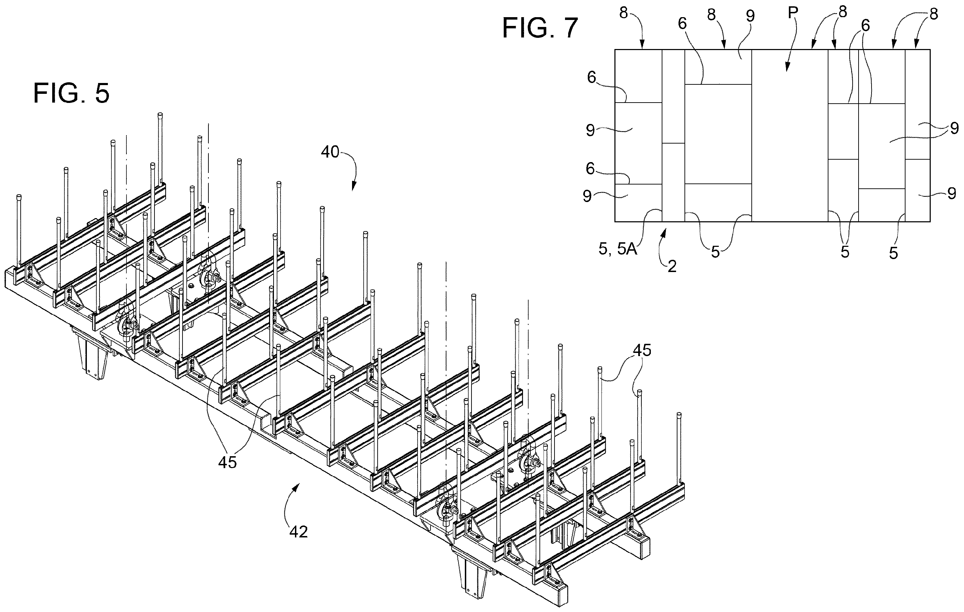

In figure 1, the number 1 indicates, as a whole, a machine for cutting a glass sheet 2 according to a cutting program P stored in a control unit 3 of the machine 1 and illustrated in figure 7. The cutting program P comprises a plurality of first transverse cutting lines 5 parallel to one another to separate from the sheet 2 a plurality of crosspieces 8 and, for at least part of the crosspieces 8, one or more cutting lines 6 orthogonal to the lines 5 to divide each crosspiece 8 into two or more smaller crosspieces 9. Cutting programs different from the one illustrated have other cutting lines with further division of the smaller crosspieces 9.

In any case, with reference to figure 1, the machine 1 comprises, aligned in a longitudinal direction 10 and starting from a zone A for inlet of the sheets 2 to be cut, a sheet pre-processing station 11, a loading/unloading and temporary storage unit 12 for the crosspieces 8,9, and a cutting table 13.

In the station 11 work processes are performed, for example grinding and/or marking of crosspieces/segments of sheet with machines comprising a supporting table 14 for supporting the incoming sheets, known per sé.

The supporting table 14, the unit 12 and the cutting table 13 can form parts of one single machine or be separate and synchronised units and comprise respective horizontal support surfaces flush with one another, indicated by 15, 16 and 18 respectively and each provided with a respective sheet feed device, known per sé, advantageously of the belt type. Preferably the sheet feed devices for feeding the sheets onto the surfaces 15, 16 and 18 are mutually independent and synchronisable.

The supporting surface 18 of the table 13 comprises a surface 20 for supporting and cutting the sheets and a surface 21 for transferring the segments, both provided with respective belts 22 for moving the sheets in opposite senses in the longitudinal direction 10. The surfaces 20 and 21 are arranged so that the former is downstream and the latter is upstream of a cutting station 23 which houses a cutting bridge 24 known per sé and comprising a single cutting head for cutting monolithic glass sheets or two facing cutting heads, as in the example described, for cutting laminated glass sheets 2, i.e. comprising two lateral glass sheets and one layer of intermediate thermoplastic material. In any case, the cutting head or heads are movable in a cutting direction T orthogonal to the direction 10 and extending between the two surfaces 20 and 21.

The cutting table 13 comprises a motorised bridge 25 controlled by the unit 3, for sheet abutment, known per sé and schematically illustrated, which is movable along the surface 20 in the direction 10 between two extreme stroke end longitudinal positions, one of which is retracted and adjacent to the cutting station 23, i.e. in the vicinity of a first end of the surface 20, and one spaced from the station 23, in which the bridge is arranged in a second longitudinal end of the surface 20, as illustrated in figure 1.

The table 13 also comprises a sheet movement device 26 independent of, or preferably carried by, the abutment bridge 25, also known per sé and not described in detail, schematically illustrated. Advantageously, the movement device is of the suction cup type, it is motorised and controlled by the unit 3 to translate in opposite senses in the direction 10 and below the surface 20 and to move the sheet 2 and the crosspieces 8, when necessary, towards the station 23 after the sheet or the crosspieces have been abutted, as will be described more clearly below.

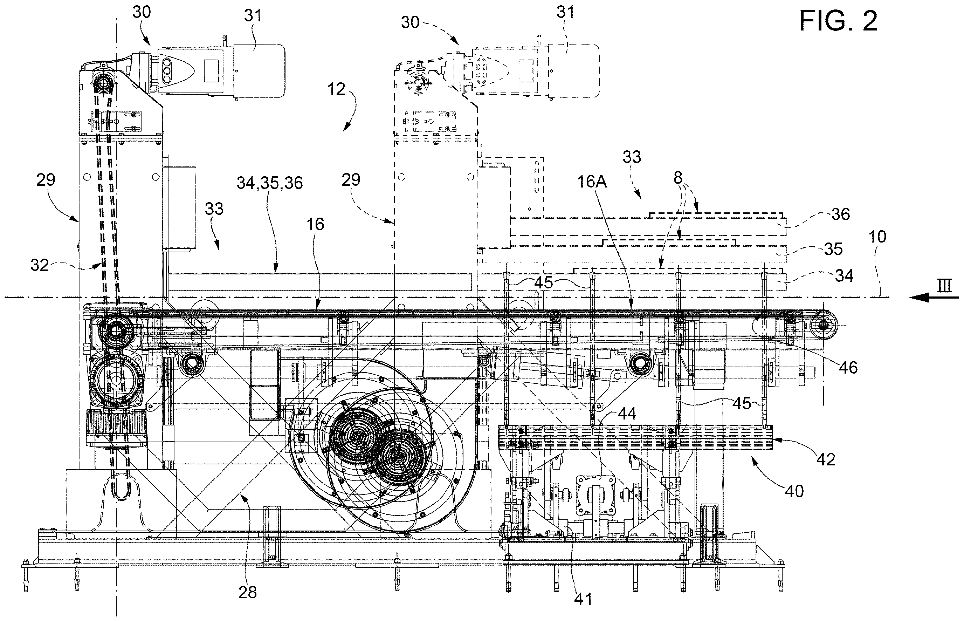

Again with reference to figure 1, the unit 12 comprises a fixed structure 28 supporting the support surface 16 and a movable structure 29 on wheels and with floor guides, movable in opposite senses in the direction 10 under the thrust of its own activation device 30. The device 30 comprises one single motor 31. Preferably, the motor 31 is arranged at an upper end of the structure 29 and is coupled to the wheels by means of a mechanical transmission 32, for example a chain transmission (fig. 2).

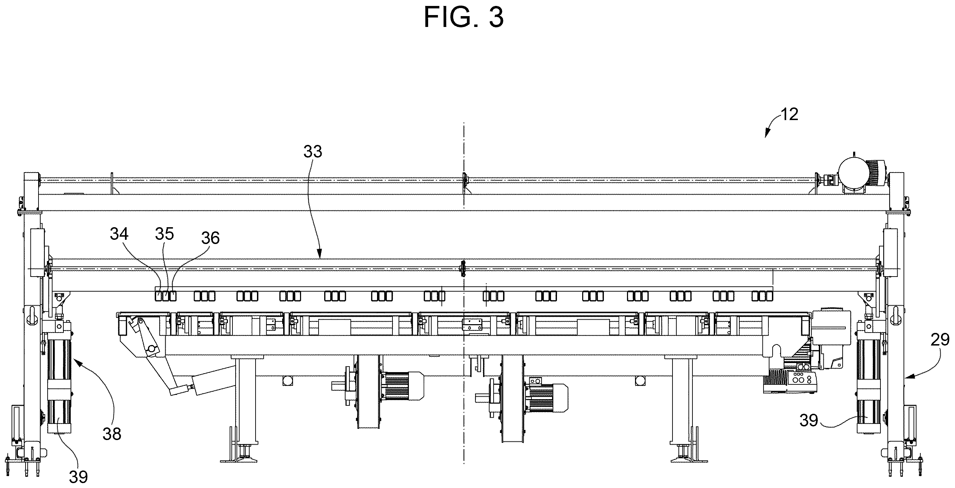

With reference to the figures 2 and 3, the unit 12 comprises a temporary storage 33, which is supported by the movable structure 29 to translate together with the structure 29 from and to the station 23 and above the surface 16 between two extreme stroke end positions, one of which is retracted, illustrated in figures 1 and 2, in which it is arranged adjacent to the station 14, and one forward, in which it is arranged adjacent to and upstream of the transfer surface 21 for receiving the crosspieces 8 coming from the station 23.

In the particular example described, the storage 33 is multitier and is of the vertically compactable type. The storage 33 advantageously comprises three comb-like structures 34,35 and 36 having their free ends facing the station 23 and each defining a relative horizontal support surface. The three structures 34, 35 and 36 are coupled to the structure 29 to translate with respect to the structure 29 along respective vertical guides in directions orthogonal to the support surface 16 between respective raised positions for supporting and storing the crosspieces 8, illustrated by a broken line in figure 2, and a common lowered position for loading/unloading and supporting the crosspieces, illustrated in figure 1 and by a continuous line in figure 2. When the three structures 34, 35 and 36 are arranged in their lowered positions, the respective support surfaces are flush with one another, parallel to the support surface 16 and all raised with respect to the support surface 16 by a quantity sufficient to allow a glass sheet 2 to pass over and/or lie on the support surface 16 without interfering with the structures 29, 34-36.

Advantageously, the three structures 34-36 are moved along the relative guides by means of a common actuation assembly 38 (figure 3). The assembly 38 preferably comprises a pair of pneumatic or hydraulic actuators 39 arranged parallel to each other to move in sequence the three structures 34-36 from the common lowered position to the respective raised positions.

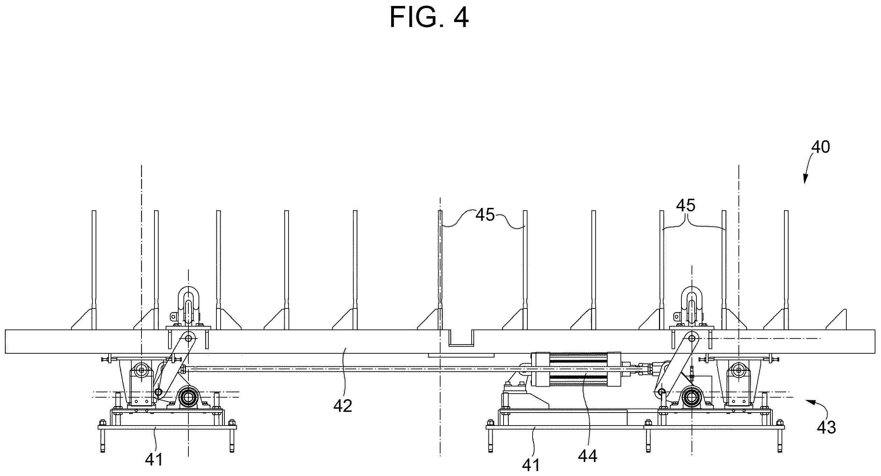

Again with reference to the figures 1 and, in particular, with reference to figures 3 and 4, the unit 12 comprises, lastly, a lifting device 40 for lifting the crosspieces 8 from the surface 16.

The device 40 is associated with a portion 16A of the support surface 16 extending from the transfer surface 21 and left uncovered by the storage 33 when the movable structure 29 is arranged in its retracted position, as illustrated in figures 1 and 2.

The device 40 is housed below the portion 16A and comprises its own fixed floor structure 41 and a horizontal frame 42 arranged parallel to the support surface 16 and coupled to the structure 41 in a vertically slidable manner from and towards the surface 16 under the thrust of an actuator assembly 43 (fig. 4), advantageously of the type with rotating connecting rods, in turn comprising respective hydraulic actuators 44 (figure 4) controlled by the unit 3.

The frame 42 carries, integrally connected to its surface facing the surface 16, a plurality of vertical struts 45 which extend below the surface 16 when the frame 42 is arranged in a lowered resting position, illustrated in figure 1, and project above the support surface 16 through respective through openings 46 (figures 1 and 2) obtained through the support surface 16 when the frame 42 is arranged in a raised position to space the crosspieces 8 from the surface 16 and allow insertion of the structures 34-36 below said crosspieces 8 during movement of the structure 29 towards its forward position.

The operation of the machine 1 will now be described starting from the condition illustrated in figure 1, in which a sheet 2 is arranged on the table 14, the structure 29 is arranged in its retracted position, the three structures 34, 35 and 36 are arranged in their lowered positions, the abutment bridge 25 is arranged by the unit 3 in its forward position at the end of the surface 20 longitudinally opposite the end converging in the station 23, and the struts 45 are arranged in their lowered position below the surface 16.

Starting from said condition, the sheet 2 is moved forward on the surfaces 16 and 18 until it abuts against the abutment bridge 25 which, according to the longitudinal dimensions of the sheet 2, has been kept at a standstill in its position spaced from or alongside the cutting station 23 thus stopping the sheet 2 in a predefined reference position stored in the unit 3 in which a first cutting line 5A is arranged downstream of the line T.

At this point, the sheet 2 is stably connected to the device 26 and is retracted towards the station 23 until the first line 5A coincides with the direction T, after which it is cut forming a first crosspiece 8. Keeping the remaining part of the sheet 2 always connected to the device 26 and in a fixed position, the cut crosspiece 8 is retracted by means of the belts 22 and positioned above the portion 16A of the surface 16. At this point the device 40 is activated and the crosspiece 8 lifted from the surface 16 keeping it parallel, after which the structure 29 is moved forward until the structures 34-36 are arranged below the crosspiece 8, then the struts 45 are lowered and the structure 29 is re-set to its retracted position. At this point, the structures 34-36, which are always flush with one another, are ready to receive other crosspieces in a position alongside the crosspiece 8 supported. If there is no more space above the structure 36 or the storage cycle schedules a different allocation of the following crosspieces 8, the actuators 39 are activated and the structure 36 brought to a raised position (fig. 2) leaving the structures 34 and 35 in their lowered position for receiving the crosspieces.

As soon as the portion 16A of the surface 16 is free, the device 26 is activated again and the remaining part of the sheet 2 is retracted again until the second line 5 coincides with the line T after cutting of the second crosspiece 8 which is retracted, lifted and stored on the structure 35 following the stages described above. Following the stages described, all the crosspieces 8 which require further cutting are then cut and stored in sequence with the exception of the last one which is left on the surfaces 18,21 and subsequently cut if necessary.

Each crosspiece 8 is cut considering it to all intents and purposes like a sheet 2. For this reason, once it is re-set on the portion 16A of the surface 16, it is fed onto the surface 18 towards the abutment bridge 25, arranged in a reference position and rotated 90° about a vertical axis, and then stably connected to the device 26. After this, as for the sheet 2, it is progressively cut retracting it by steps into the station 23. If parts of the crosspiece 8 are likely to create obstructions on the surface 18, they are moved onto the surface 16 or if necessary temporarily stored in one of the available structures.

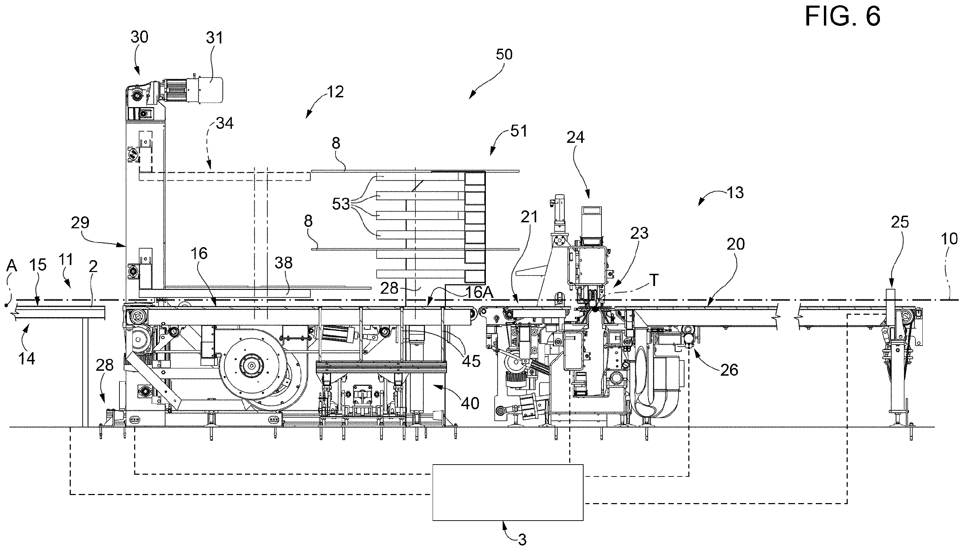

The embodiment illustrated in figure 6 relates to a machine 50 for cutting glass sheets 2, which differs from the machine 1 only in certain embodiment details and the component parts of which are identified, where possible, by the same reference numbers as the corresponding parts of the machine 1.

In particular, the machine 50 comprises a unit 12 which is different from the unit 12 of the machine 1. In the machine 50, the unit 12 comprises a temporary storage 51 with shelves for housing the crosspieces 8 in a horizontal position. The storage 51 is arranged in a fixed position above the portion 16A of the surface 16 and comprises a plurality of comb-like structures 53 overlapping one another and stably connected to the fixed structure 28 in positions vertically spaced from one another to each define a support for one or more crosspieces 8. The comb-like structures 53 have their free ends facing the movable structure 29 which carries, coupled, only the comb-like structure 34 to feed the crosspieces 8 onto and collect them from each of the support structures 51.

The operation of the storage 50 therefore differs from that of the machine 1 only as regards the movement and collection of the crosspieces 8 into/from the storage 51 while all the other operations are performed in the same way as in the machine 1.

## Claims

1. A method for cutting a glass sheet (2) according to a program (P) for cutting the sheet, comprising a plurality of first parallel cutting lines for separating one or more crosspieces (8) from the sheet (2) and, for at least a portion of said crosspieces, a plurality of further cutting lines of the related crosspieces; the method being carried out by a cutting machine (1) comprising a cutting table (13) having a sheet support surface (20) and, aligned in a longitudinal direction (10), a cutting station (23) housing a cutting bridge (24) for cutting the sheet (2) along said cutting lines and arranged beside a first longitudinal end of said support surface (20) and a sheet positioning device (25) adapted to be arranged at a second longitudinal end of the support surface (20) opposite to said first end along said longitudinal direction (10); the method comprises the steps of arranging and keeping said positioning device (25) at said second end, arranging a sheet to be cut on said support surface (20), advancing the sheet (2) towards said positioning device (25) in said longitudinal direction (10) and positioning the sheet in a forward reference position by bringing the sheet (2) into contact with said positioning device (25), the method being **characterized by** stably connecting said sheet (2) to a motorised moving device (26) and by keeping said sheet connected until all the cuts along said first cutting lines have been made, by retracting said sheet (2) in said longitudinal direction (10) towards said cutting station (23) and said first end, by cutting said sheet (2) along a first one of said first cutting lines thus forming a first crosspiece (8), by moving the first crosspiece (8) into a temporary storage (33;51) arranged upstream of said first end in the advancing direction of the sheet, by retracting the remaining part of said sheet towards said cutting station (23) and by repeating said cutting operation and moving operation into said temporary storage (33; 51) for at least a portion of the crosspieces provided by said cutting program (P).

2. A method according to claim 1, **characterized by** picking a crosspiece stored in said temporary storage (33;51), by arranging the crosspiece (8) on said support surface (20), by arranging said positioning device (25) downstream of said cutting station (23), by advancing the crosspiece (8) until it abuts against said positioning device (25), by stably connecting said crosspiece (8) to said motorised moving device (26) and by retracting the crosspiece (8) towards the cutting station (23) and by cutting the crosspiece (8) in said station, thus separating further crosspieces (9) according to said cutting program (P) while always keeping the crosspiece connected to the moving device.

3. A method according to claim 2, **characterized in that**, after separating at least one of said further crosspieces (9), the further crosspiece (9) is moved into said temporary storage (33;51) while waiting to be brought onto said support surface.

4. A method according to any one of the preceding claims, **characterized in that** said crosspieces in said temporary storage (33) are each arranged on a related horizontal support (34,35,36), and **in that** said crosspieces are moved from and towards said temporary storage by moving said temporary storage (33) from and towards said cutting station (23), parallel to said longitudinal direction (10).

5. A method according to claim 4, **characterized in that** said crosspieces are housed in, and picked from, said temporary storage (33) by vertically translating at least a portion of said horizontal supports (34,35,36).

6. A method according to any one of the preceding claims, **characterized in that** the storing of said crosspieces in said temporary storage comprises a step of retracting said crosspiece (8) with respect to said cutting station (23) and a step of arranging said crosspiece (8) on an auxiliary support surface, which is arranged upstream of said cutting station (23) and at least partly below said temporary storage (33;51).

7. A method according to any one of the preceding claims, **characterized in that** storing of each of said crosspieces in said temporary storage (33;51) comprises a step of lifting said crosspiece (8) from the support surface, said lifting step being carried out by pushing said crosspiece (8) from the bottom by acting through said auxiliary support surface.

8. A machine (1) for cutting a glass sheet (2) according to a cutting program (P), which is stored in a control unit (3) of the machine (1) and comprises a plurality of first parallel cutting lines for separating one or more crosspieces from the sheet and, for at least a portion of said crosspieces, a plurality of further cutting lines of the related crosspieces, the machine (1) comprising a cutting table (13) having a support surface (20) and, aligned in a longitudinal direction (10), a cutting station (23) housing a cutting bridge (24) for cutting the sheet (2) along said first cutting lines and arranged substantially at a first end of said support surface (20) and a sheet positioning device (25) adapted to be arranged at a second end of the support surface (20) opposite to said first end, a motorised moving device (26) for moving the sheet (2) in said longitudinal direction (20), a temporary storage (33;51) for housing said crosspieces (8), means for transferring said crosspieces from and towards said temporary storage (33;51); said temporary storage (33;51) being arranged upstream of said first end; **characterized in that** said control unit (3) controls said positioning device (25) and said motorised moving device (26) so as to carry out the method according to anyone of the previous claims.

9. A machine according to claim 8, **characterized in that** said temporary storage (33) is movable from and towards said cutting station (23), parallel to said longitudinal direction (10).

10. A machine according to claim 9, **characterized in that** said temporary storage comprises a plurality of overlapped vertical supports (34,35,36), and **in that** it further comprises actuating means (38) for vertically translating at least a portion of said horizontal supports.

11. A machine according to any one of claims from 8 to 10, **characterized in that** said temporary storage (51) is a fixed storage, and **in that** it further comprises an auxiliary support surface arranged upstream of said cutting station (23) and at least partly below said temporary storage; further moving means being provided for translating said crosspieces from and towards said auxiliary support surface in said longitudinal direction (10).

12. A machine according to any one of claims from 8 to 11, **characterized by** comprising spacer means for lifting said crosspieces from said auxiliary support surface, said spacer means comprising a plurality of struts (45) adapted to cross said auxiliary support surface to push said crosspiece from the bottom.

13. A machine according to claim 12, **characterized in that** said temporary storage, said auxiliary surface, said spacer means and said actuating means form parts of a unit (12) that is separate from said cutting table (13).

14. A machine according to any one of claims from 8 to 13, **characterized in that** said cutting table (13) has a transfer surface (21); said transfer surface (21) and said support surface (20) being arranged at opposite longitudinal sides of said cutting station (23) and comprising respective devices (22) for translating the sheet/crosspiece in said longitudinal direction (10).

## Patentansprüche

1. Verfahren zum Schneiden einer Glasplatte (2) gemäß einem Programm (P) zum Schneiden der Platte, mit mehreren ersten parallelen Schneidlinien zum Trennen eines oder mehrerer Querstücke (8) von der Platte (2) und, für mindestens einen Teil der Querstücke, mehreren weiteren Schneidlinien der betreffenden Querstücke; wobei das Verfahren ausgeführt wird durch eine Schneidmaschine (1) mit einem Schneidtisch (13), der eine Plattentragfläche (20) und, ausgerichtet in einer Längsrichtung (10), eine Schneidstation (23) aufweist, in der eine Schneidbrücke (24) zum Schneiden der Platte (2) entlang der Schneidlinien untergebracht ist und die neben einem ersten Längsende der Tragfläche (20) angeordnet ist, und mit einer Plattenpositionierungsvorrichtung (25), die in der Lage ist, an einem dem ersten Ende gegenüberliegenden zweiten Längsende der Tragfläche (20) und entlang der Längsrichtung angeordnet zu werden, wobei das Verfahren die Schritte umfasst: Anordnen und Belassen der Positionierungsvorrichtung (25) an dem zweiten Ende, Anordnen einer zu schneidenden Platte auf der Tragfläche (20), Vorbewegen der Platte (2) zu der Positionierungsvorrichtung (25) in der Längsrichtung (10) und Positionieren der Platte in einer vorwärtsgelegenen Referenzposition, indem die Platte (2) in Kontakt mit der Positionierungsvorrichtung (25) gebracht wird, wobei das Verfahren **gekennzeichnet ist durch** stabiles Verbinden der Platte (2) mit einer motorisierten Bewegungsvorrichtung (26) und durch Belassen der Platte in dem verbundenen Zustand, bis sämtliche Schnitte entlang der ersten Schnittlinien vorgenommen worden sind, durch Zurückziehen der Platte (2) in der Längsrichtung (10) zu der Schneidstation (23) und dem ersten Ende hin, durch Schneiden der Platte (2) entlang einer ersten der ersten Schneidlinien und dadurch erfolgendes Ausbilden eines ersten Querstücks (8), durch Bewegen des ersten Querstücks (8) in eine Vorrichtung zur vorübergehenden Ablage (33;51), die in der Vorbewegungsrichtung der Platte stromaufwärts des ersten Endes angeordnet ist, durch Zurückziehen des verbleibenden Teils der Platte zu der Schneidstation (23) und durch Wiederholen der Schneidoperation und der Operation des Bewegens in die Vorrichtung zur vorübergehenden Ablage (33;51) für mindestens einen Teil der von dem Schneidprogramm (P) vorgesehenen Querstücke.

2. Verfahren nach Anspruch 1, **gekennzeichnet durch** Aufnehmen eines Querstücks, das in der Vorrichtung zur vorübergehenden Ablage (33;51) abgelegt ist, durch Anordnen des Querstücks (8) auf der Tragfläche (20), durch Anordnen der Positionierungsvorrichtung (25) stromabwärts von der Schneidstation (23); durch Vorbewegen des Querstücks (8), bis dieses an der Positionierungsvorrichtung (25) anliegt, durch stabiles Verbinden des Querstücks (8) mit der motorisierten Bewegungsvorrichtung (26) und durch Zurückziehen des Querstücks (8) zu der Schneidstation (23) und durch Schneiden des Querstücks (8) in der Station, wodurch weitere Querstücke (9) gemäß dem Schneidprogramm (P) abgetrennt werden, während der Zustand der Verbindung des Querstücks mit der Bewegungsvorrichtung beibehalten wird.

3. Verfahren nach Anspruch 2, **dadurch gekennzeichnet, dass** nach dem Trennen mindestens eines der weiteren Querstücke (9), das weitere Querstück (9) in die Vorrichtung zur vorübergehenden Ablage (33;51) bewegt wird, während es auf die Verbringung auf die Tragfläche wartet.

4. Verfahren nach einem der vorherigen Ansprüche, **dadurch gekennzeichnet, dass** die Querstücke in der Vorrichtung zur vorübergehenden Ablage (33) jeweils auf einem entsprechenden horizontalen Träger (34,35,36) angeordnet werden, und dass die Querstücke von und zu der Vorrichtung zur vorübergehenden Ablage bewegt werden, indem die Vorrichtung zur vorübergehenden Ablage (33) parallel zu der Längsrichtung (10) von und zu der Schneidstation (23) bewegt wird.

5. Verfahren nach Anspruch 4, **dadurch gekennzeichnet, dass** die Querstücke in der Vorrichtung zur vorübergehenden Ablage (33) untergeberacht und aus dieser entnommen werden, indem mindestens ein Teil der horizontalen Träger (34,35,36) vertikal translatiert wird.

6. Verfahren nach einem der vorherigen Ansprüche, **dadurch gekennzeichnet, dass** das Ablegen der Querstücke in der Vorrichtung zur vorübergehenden Ablage einen Schritt des Zurückziehens der Querstücke (8) relativ zu der Schneidstation (23) und einen Schritt des Anordnens der Querstücke auf einer Hilfs-Tragfläche umfasst, die stromaufwärts der Schneidstation (23) und mindestens teilweise unterhalb der Vorrichtung zur vorübergehenden Ablage (33;51) angeordnet ist.

7. Verfahren nach einem der vorherigen Ansprüche, **dadurch gekennzeichnet, dass** das Ablegen jedes der Querstücke in der Vorrichtung zur vorübergehenden Ablage (33;51) einen Schritt des Anhebens des Querstücks (8) von der Haltefläche umfasst, wobei der Anhebe-Schritt ausgeführt wird, indem das Querstück (8) durch Betätigung mittels der Hilfs-Tragfläche von dem Boden weg gedrückt wird.

8. Maschine (1) zum Schneiden einer Glasplatte (2) gemäß einem Schneidprogramm (P), das in einer Steuereinheit (3) der Maschine (1) gespeichert ist und mehrere erste parallele Schneidlinien zum Trennen eines oder mehrerer Querstücke von der Platte und, für mindestens einen Teil der Querstücke, mehrere weitere Schneidlinien der betreffenden Querstücke aufweist, wobei die Maschine (1) aufweist: einen Schneidtisch (13), der eine Tragfläche (20) und, ausgerichtet in einer Längsrichtung (10), eine Schneidstation (23) hat, in der eine Schneidbrücke (24) zum Schneiden der Platte (2) entlang der ersten Schneidlinien untergebracht ist und die im Wesentlichen an einem ersten Ende der Tragfläche (20) angeordnet ist, und eine Plattenpositionierungsvorrichtung (25), die in der Lage ist, an einem dem ersten Ende gegenüberliegenden zweiten Ende der Tragfläche (20) angeordnet zu werden, eine motorisierte Bewegungsvorrichtung (26) zum Bewegen der Platte (2) in der Längsrichtung (10), eine Vorrichtung zur vorübergehenden Ablage (33;51) zwecks Unterbringung der Querstücke (8), eine Vorrichtung zum Überführen der Querstücke von und zu der Vorrichtung zur vorübergehenden Ablage (33;51); wobei die Vorrichtung zur vorübergehenden Ablage (33;51) stromaufwärts des ersten Endes angeordnet ist; **dadurch gekennzeichnet, dass** die Steuereinheit (3) die Positionierungsvorrichtung (25) und die motorisierte Bewegungsvorrichtung (26) derart steuert, dass diese das Verfahren nach einem der vorhergehenden Ansprüche durchführen.

9. Maschine nach Anspruch 8, **dadurch gekennzeichnet, dass** die Vorrichtung zur vorübergehenden Ablage (33) parallel zu der Längsrichtung (10) von und zu der Schneidstation (23) bewegbar ist.

10. Maschine nach Anspruch 9, **dadurch gekennzeichnet, dass** dass die Vorrichtung zur vorübergehenden Ablage mehrere überlappende vertikale Träger (34,35,36) aufweist und dass sie ferner eine Betätigungsvorrichtung (38) zum vertikalen Translatieren mindestens eines Teils der horizontalen Träger aufweist.

11. Maschine nach einem der Ansprüche 8 bis 10, **dadurch gekennzeichnet, dass** die Vorrichtung zur vorübergehenden Ablage (51) eine feste Ablagevorrichtung ist und dass sie ferner eine Hilfs-Tragfläche aufweist, die stromaufwärts der Schneidstation (23) und mindestens teilweise unterhalb der Vorrichtung zur vorübergehenden Ablage angeordnet ist; wobei ferner eine Bewegungsvorrichtung vorgesehen ist, um die Querstücke in der Längsrichtung (10) von und zu der Hilfs-Tragfläche zu translatieren.

12. Maschine nach einem der Ansprüche 8 bis 11, **gekennzeichnet durch** eine Beabstandungsvorrichtung zum Anheben der Querstücke von der Hilfs-Tragfläche, wobei die Beabstandungsvorrichtung mehrere Streben (45) aufweist, die zur Querung der Hilfs-Tragfläche in der Lage sind, um das Querstück von dem Boden weg zu drücken.

13. Maschine nach Anspruch 12, **dadurch gekennzeichnet, dass** die Vorrichtung zur vorübergehenden Ablage, die Hilfs-Fläche, die Beabstandungsvorrichtung und die Betätigungsvorrichtung Teile einer Einheit (12) bilden, die von dem Schneidtisch (13) getrennt ist.

14. Maschine nach einem der Ansprüche 8 bis 13, **dadurch gekennzeichnet, dass** der Schneidtisch (13) eine Transferfläche (21) aufweist; wobei die Transferfläche (21) und die Tragfläche (20) an gegenüberliegenden Längsseiten der Schneidstation (23) angeordnet sind und jeweilige Vorrichtungen (22) zum Translatieren der Platte/des Querstücks in der Längsrichtung (10) aufweisen.

## Revendications

1. Procédé pour couper une feuille de verre (2), selon un programme (P) de coupe de feuille, comportant une pluralité de premières lignes de coupe pour séparer une ou plusieurs traverses (8) de la feuille (2) et, pour au moins une partie desdites traverses, une pluralité de lignes de coupe supplémentaires des traverses correspondantes; le procédé étant effectué par une machine de coupe (1) comportant une table de coupe (13) ayant une surface de support de feuille (20) et, alignée dans une direction longitudinale (10), une station de coupe (23) logeant un pont de coupe (24) pour couper la feuille (2) le long desdites lignes de coupe et disposée à proximité d'une première extrémité longitudinale de ladite surface de support (20) et un dispositif de positionnement de feuille (25) agencé pour disposé à une seconde extrémité longitudinale de la surface de support (20) opposée à ladite première extrémité le long de ladite direction longitudinale (10) ; le procédé comprenant les étapes d'arrangement et de maintien dudit dispositif de positionnement (25) à ladite seconde extrémité, l'amenée d'une feuille à couper sur ladite surface de support (20), en avançant la feuille (2) en direction du dispositif de positionnement (25) dans ladite direction longitudinale (10) et le positionnement de la feuille dans une position de référence précédente en amenant la feuille (2) en contact avec ledit dispositif de positionnement (25), le procédé étant **caractérisé en ce que** ladite feuille (2) est connectée de façon stable à un dispositif de déplacement motorisé (26) et en maintenant ladite feuille connectée jusqu'à ce que toutes les coupes le long des premières lignes de coupe aient été effectuées, en rétractant ladite feuille (2) dans ladite direction longitudinale (10) vers ladite station de coupe (23) et ladite première extrémité, en coupant ladite feuille (2) le long d'une première desdites premières lignes de coupe, formant ainsi une première traverse (8), en déplaçant la première traverse (8) dans un stock temporaire (33; 51) disposé au-delà de ladite première extrémité dans la direction d'avancement de la feuille, en rétractant la partie restante de ladite feuille contre ladite station de coupe (23) et en répétant ladite opération de coupe et de déplacement dans ledit stock temporaire (33; 51) pour au moins une partie des traverses fournies par ledit programme de coupe (P).

2. Procédé selon la revendication 1, **caractérisé par** le prélèvement d'une traverse stockée dans ledit stock temporaire (33 ; 51), en arrangeant la traverse (8) sur ladite surface de support (20), en arrangeant ledit dispositif de positionnement (25) en aval de ladite station de coupe (23), en avançant la traverse (8) jusqu'à ce qu'elle bute contre ledit dispositif de positionnement (25), en connectant de façon stable ladite traverse (8) audit dispositif de déplacement motorisé (26) et en rétractant la traverse (8) en direction de la station de coupe (23) et en coupant la traverse (8) dans ladite station, séparant ainsi d'autres traverses (9) selon ledit programme de coupe (P) tout en maintenant toujours la traverse connectée au dispositif de déplacement.

3. Procédé selon la revendication 2, **caractérisé en ce que**, après avoir séparé au moins une des autres traverses (9), l'autre traverse (9) est déplacée dans ledit stock temporaire (33; 51) en attendant d'être amené sur ladite surface de support.

4. Procédé selon l'une quelconque des revendications précédentes, **caractérisé en ce que** lesdites traverses dans ledit stockage temporaire (33) sont disposées chacune sur un support horizontal correspondant (34, 35, 36) et **en ce que** lesdites traverses sont déplacées de et vers ledit stockage temporaire en déplaçant ledit stockage temporaire (33) depuis et vers ladite station de coupe (23), parallèlement à ladite direction longitudinale (10).

5. Procédé selon la revendication 4, **caractérisé en ce que** ladite traverse est rangée dans, et retirée dudit stockage temporaire (33) par translation verticale d'au moins une partie desdits supports horizontaux (34, 35, 36).

6. Procédé selon l'une quelconque des revendications précédentes, **caractérisé en ce que** le stockage desdites traverses dans ledit stockage temporaire comprend une étape de rétraction desdites traverses (8) par rapport à ladite station de coupe (23) et une étape de disposition desdites traverses (8) sur une surface de support auxiliaire, qui est agencée en aval de ladite station de coupe (23) et au moins partiellement au-dessous dudit stockage temporaire (33; 51).

7. Procédé selon l'une quelconque des revendications précédentes, **caractérisé en ce que** le stockage de chacune desdites traverses dans le stockage temporaire (33; 51) comporte une étape de levage de ladite traverse (8) depuis la surface de support, ladite étape de levage étant effectuée en poussant ladite traverse (8) depuis le fond en agissant à travers la surface de support auxiliaire.

8. Machine (1) pour couper une feuille de verre (2) selon un programme de coupe (P), qui est stockée dans une unité de contrôle (3) de la machine (1) et comprend une pluralité de premières lignes de coupe parallèles pour séparer une ou plusieurs traverses de la feuille, et pour au moins une partie desdites traverses, une pluralité d'autres lignes de coupe desdites traverses correspondantes, la machine (1) comportant une table de coupe (13) ayant une surface de support (20) et, alignée dans une direction longitudinale (10), une station de coupe (23) logeant un pont de coupe (24) pour couper la feuille (2) le long desdites premières lignes de coupe et disposée essentiellement à proximité d'une première extrémité longitudinale de ladite surface de support (20) et un dispositif de positionnement de feuille (25), agencé pour être disposé à une seconde extrémité longitudinale de la surface de support (20) opposée à la première extrémité, un dispositif de déplacement motorisé (26) pour déplacer la feuille (2) dans ladite direction longitudinale (10), un stock temporaire (33; 51) pour loger lesdites traverses (8), des moyens pour transférer lesdites traverses de et vers ledit stockage temporaire (33; 51), ledit stockage temporaire (33; 51), étant disposé en aval de ladite première extrémité; **caractérisé en ce que** ladite unité de contrôle (3) contrôle ledit dispositif de positionnement (25) et ledit dispositif de déplacement motorisé (26) de manière à respecter le procédé selon chacune des revendications précédentes.

9. Machine selon la revendication 8, **caractérisée en ce que** ledit stockage temporaire (33) est mobile de et vers ladite station de coupe (23), parallèle à ladite direction longitudinale (10).

10. Machine selon la revendication 9, **caractérisée en ce que** ledit stockage temporaire comporte une pluralité de supports verticaux superposés (34, 35, 36) et **en ce qu'**il comporte en outre des moyens d'actionnement (38) pour transférer verticalement au moins une partie desdits supports horizontaux.

11. Machine selon l'une quelconque des revendications 8 à 10, **caractérisée en ce que** ledit stockage temporaire (51) est un stockage fixe, et **en ce qu'**il comporte en outre une surface de support auxiliaire disposée en aval de ladite station de coupe (23) et au moins partiellement en-dessous dudit stockage temporaire ; en outre des moyens de déplacement étant agencés pour transférer lesdites traverses de et vers la surface de support auxiliaire dans ladite direction longitudinale (10).

12. Machine selon l'une quelconque des revendications 8 à 11, **caractérisée en ce qu'**elle comporte des moyens d'espacement pour soulever lesdites traverses de ladite surface de support auxiliaire, lesdits moyens d'espacement comportant une pluralité d'entretoises (45) agencées pour croiser lesdites surfaces de support auxiliaires pour pousser lesdites traverses depuis le sol.

13. Machine selon la revendication 12, **caractérisée en ce que** ledit stockage temporaire, lesdites surfaces auxiliaires, lesdits moyens d'espacement et lesdits moyens d'actionnement constituent des parties d'une unité (12) qui est séparée de ladite table de coupe (13).

14. Machine selon l'une quelconque des revendications 8 à 13, **caractérisée en ce que** ladite table de coupe (13) comporte une surface de transfert (21) ; ladite surface de transfert (21) et ladite surface de support (20) étant agencées sur des côtés opposés de ladite station de coupe (23) et comprenant des dispositifs respectifs (22) pour transférer les traverses de la feuille dans ladite direction longitudinale (10).
